Europäisches Patentamt

**European Patent Office**

Office européen des brevets

(11) Veröffentlichungsnummer: **0 259 600 B1**

(12) **EUROPÄISCHE PATENTSCHRIFT**

(45) Veröffentlichungstag der Patentschrift:
17.01.90

(51) Int. Cl.⁴: **B23D 25/12**

(21) Anmeldenummer: 87111181.1

(22) Anmeldetag: 03.08.87

(54) Rotierende Schopf- und Probenschere für Draht-Walzenstrassen.

(30) Priorität: 19.08.86 DE 3628069

(43) Veröffentlichungstag der Anmeldung:
16.03.88 Patentblatt 88/11

(45) Bekanntmachung des Hinweises auf die Patenterteilung:
17.01.90 Patentblatt 90/3

(84) Benannte Vertragsstaaten:
AT DE ES GB IT SE

(56) Entgegenhaltungen:
CH-A- 498 692
DE-B- 1 627 270
DE-B- 2 204 266
DE-C- 242 329
DE-C- 261 712
DE-C- 713 993
DE-C- 1 051 613

SOVIET INVENTIONS ILLUSTRATED, Sektion
Mechanik, 84. Woche, 18. April 1984,
Zusammenfassungsnr. 061245, P54/P62, Derwent
Publications Ltd., London, GB

(73) Patentinhaber: SMS SCHLOEMANN-SIEMAG
AKTIENGESELLSCHAFT,
Eduard-Schloemann-Strasse 4, D-4000 Düsseldorf 1(DE)

(72) Erfinder: Klein, Dieter, Schützenstrasse 41b,
D-5900 Siegen(DE)

(74) Vertreter: Müller, Gerd et al, Patentanwälte
HEMMERICH-MÜLLER-GROSSE-POLLMEIER-MEY
Hammerstrasse 2, D-5900 Siegen 1(DE)

## Beschreibung

Die Erfindung betrifft eine rotierende Schopf- und Probenschere für Draht- Walzenstraßen mit zwei synchron rotierenden Messerträgern und zwei in Umlaufrichtung der Messerträger versetzt angeordneten Messerpaaren, die zum Heraustrennen eines Probestückes nacheinander zum Schnitt bringbar sind und geht damit von der DE-AS 10 51 613 aus. Die hierin beschriebene rotierende Drahtschere hat gegenläufig umlaufende Messer in der Art einer Trommelschere, die auf in einer gemeinsamen vertikalen Ebene angeordneten Drehachsen sitzen. Die Messerschneiden der Messer verlaufen achsparallel, und um bei feststehender Walzachse, d.h. unbeweglichem Einlaufkanal, ein Messerpaar wahlweise in und außer Schnittstellung zu bringen, sind die Messerträger auf ihren Messerwellen axial verschiebbar, d.h. die Messerschneiden führen eine Längs-Verschiebung aus. Bei dieser bekannten rotierenden Schere handelt es sich um eine aus dem Stand anlaufende Schere.

Um den Energieaufwand und steuerungstechnische Schwierigkeiten solcher Anlaufscheren zu vermeiden und zu einem Durchlaufbetrieb zu gelangen, wurden in letzter Zeit - basierend auf einer rotierenden Ringmesserschere nach der DE-PS 71 39 93 - Durchlaufscheren entwickelt, die jedoch nur zum Schopfen des Vorder- und Hinterendes eines Walzstabes geeignet sind (DE-AS 16 27 270 und 22 04 266). Beiden bekannten Ringmesser-Scheren ist gemeinsam, daß die Drehachsen der scheibenartigen, gegenüberliegenden Messerträger mit ihren ununterbrochenen Ringmessern auf Drehachsen sitzen, die in einer gemeinsamen senkrechten Ebene verlaufend derart zueinander geneigt sind, daß die Ringmesserschneiden spitzwinklig zueinander verlaufen, d.h. iber einen Bogenwinkel gewisser Länge, der einen tangen tialen Schneidbereich definiert, auf Schnittabstand ge langen. Der Schnitt erfolgt demgemäß nicht rechtwinklig zum Walzgut, sondern schräg, so daß das Vorderende des geschnittenen Drahtes in einer Weise angespitzt wird, die für ein störungsfreies Weiterlaufen des Drahtes ungünstig ist.

Bei der Schere nach der DE-AS 16 27 270 wird bei feststehender Neigung der Drehachsen ein Schnitt dadurch herbeigeführt, daß das Walzgut durch eine einlaufseitige Weiche gesteuert den Schneidbereich der Ringmesser durchwandert, und zwar zum Schopfen eines Vorderendes aufwärts und zum Schopfen eines Hinterendes des Drahtes wieder abwärts. Die Ringmesserschere nach der DE-AS 22 03 266 indessen benötigt keine einlaufseitige Weiche zur Ausführung von Schopfschnitten und führt Schnitte durch eine Schwenkbewegung oder Axialverschiebung eines der Messerträger aus, um die mit einer Weiche einhergehenden Richtungsänderungen des Walzgutes und daraus resultierenden Störungen zu vermeiden.

Zurückgreifend auf die Anlaufschere nach der DE-AS 10 51 613 hat sich die Erfindung die Aufgabe gestellt, unter Beibehaltung von zwei nacheinander zum Schnitt gelangenden, quer zum Walzgut schneidenden Messerpaaren, die Probestücke an beliebigen Stellen eines schnellaufenden Walzstabes herauszuschneiden vermögen, einen Durchlaufbetrieb der Schere zu ermöglichen.

Die Lösung dieser Aufgabe besteht gemäß der Erfindung darin, daß

a) die Messerträger in gegenüberliegender Anordnung um Drehachsen rotieren, die in einer gemeinsamen, unterhalb der Walzachse verlaufenden Horizontalebene liegen,

b) die Messer in paarweiser Zuordnung mit radial verlaufenden Schneiden eingesetzt sind, und

c) die Messerpaare durch relative Querverschiebung der Schneiden zueinander zum Schnitt bringbar sind.

Das Merkmal a) ist auch bei einer Durchlaufschere nach der DE-PS 71 39 93 vorhanden, deren gegenüberliegende Messerträger jedoch mit Ringmessern besetzt sind, die das Walzgut nicht in einer Querebene zu schneiden vermögen, und nur zum Schopfen oder Unterteilen des durchlaufenden Walzgutes, nicht zum Heraustrennen kurzer Probestücke. Dies wird durch die als bekannt vorausgesetzte paarweise Zuordnung vereinzelter Messerpaare im Sinne der DE-AS 10 51 613 erreicht mit der Maßgabe, daß die Messer nach dem Merkmal b) mit radial verlaufenden Schneiden eingesetzt sind, um das Walzgut exakt in Querrichtung durchzutrennen. Die relative Querverschiebung nach dem Merkmal c) ist durch die DE-AS 22 04 266 für Ringmesser bekannt, was zwar in Übereinstimmung mit dem Erfindungsgegenstand zu einem feststehenden Einlaufkanal führt, ohne jedoch die Nachteile der Ringmesser-Durchlaufscheren hinsichtlich der Schnittausführung und der Unmöglichkeit, kurze Probestücke an beliebiger Stelle aus dem laufenden Walzgut herauszuschneiden, zu beseitigen. Die vorerwähnten Vorteile der rotierenden Schere gemäß der Erfindung werden durch die Gesamtkombination der Merkmale a) bis c) erhalten.

Es sind verschiedene Ausführungsmöglichkeiten des Lösungsprinzips gemäß der Erfindung denkbar. Die Ausführungsform nach den Patentansprüchen 2 mit 3 macht von der axialen Querverschiebung eines Messerträgers zur Ausführung von Trennschnitten Gebrauch mit der Besonderheit, daß beide vereinzelte Messerpaare durch eine feststehende Neigung beider Drehachsen zueinander zwangläufig nacheinander zum Schnitt gelangen Dies bedeutet, daß auch beim Schopfen zwei Schnitte ausgeführt werden, also auch ein "Probestück" kurzer Länge anfällt, was in Kauf genommen wird.

Weiteren Ausführungsmöglichkeiten nach den Patentansprüchen 4 bis 6 beruhen darauf, die zum Schnitt quer bewegten Messer mit ihren radial verlaufenden Messerschneiden an getrennten schwenkbaren Messerhebeln anzuordnen, die in der Art von Maulscheren über verschiebbare Steuernocken zum Schnitt gebracht werden. Bei diesen Ausführungsformen sind weniger Massen zu bewegen als bei der Querverschiebung eines gesamten rotierenden Messerträgers samt Drehachse.

In der Zeichnung sind drei Ausführungsbeispiele des Erfindungsgegenstandes dargestellt, und zwar zeigen

Fig. 1 eine Durchlaufschere mit in waagerechter Ebene spitzwinkelig zueinander geneigten Messerträgern in Draufsicht,

Fig. 2 den positiv angetriebenen Messerträger nach Fig.1 in axialer Seitenansicht,

Fig. 3 die Schere nach Fig. 1 in der Seitenansicht entgegen Walzrichtung,

Fig. 4 ein zweites Ausführungsbeispiel mit schwenkbarem Messerhebel in Seitenansicht in Richtung des laufenden Walzgutes,

Fig. 5 eine axiale Seitenansicht von Fig. 4, von rechts gesehen,

Fig. 6 eine den verschiebbaren Steuernocken betreffende Einzelheit der Schere nach Fig. 4 und 5, und

Fig. 7 ein drittes Ausführungsbeispiel entsprechend Fig. 4 bis 6 in einer Abwandlung.

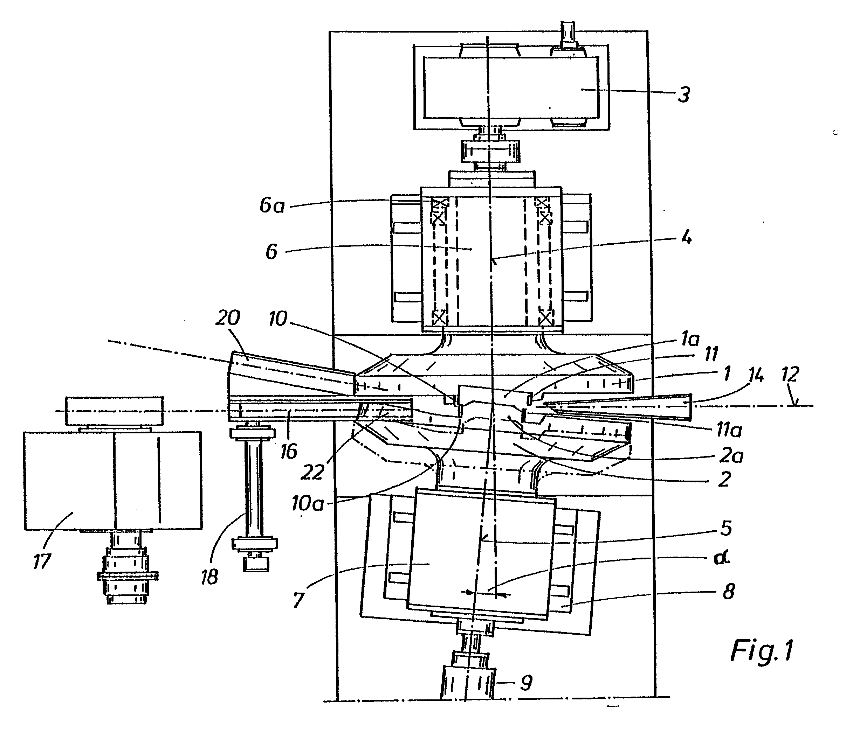

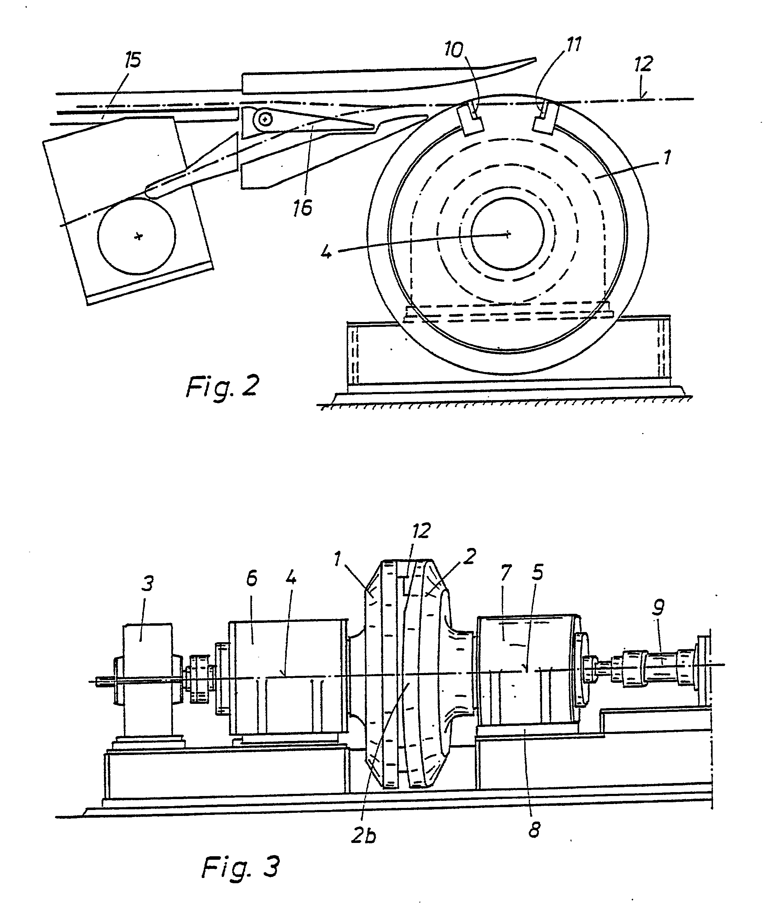

Die rotierende Durchlaufschere nach Fig. 1 bis 3 hat zwei gegenüberliegende, scheibenartige Messerträger 1 und 2, die ständig durchlaufend synchron angetrieben sind. Im Ausführungsbeispiel ist nur der Messerträger 1 über ein Vorgelege 3 und einen nicht dargestellten Motor positiv angetrieben, so daß der Messerträger 2 mit dem Messerträger 1 mechanisch synchronisiert umläuft. Die Drehachsen 4 und 5 beider Messerträger liegen in einer gemeinsamen horizontalen Ebene, wie am besten aus Fig. 3 zu ersehen ist. Die Drehachse 5 des Messerträgers 2 ist gegenüber der verlängerten Drehachse 4 des Messerträgers 1 um einen kleinen Winkel α geneigt angeordnet, so daß auch die Rotationsebenen der beiden scheibenartigen Messerträger 1 und 2 unter diesem spitzen Winkel geneigt sind. Beide Messerträger sind über ihre Wellen in Lagern 6 und 7 drehbar gelagert, wobei das Lager 6 mit einem Axiallager 6a zur Aufnahme der Schnittkräfte versehen ist. Das Lager 5 für die Welle des Messerträgers 2 ist auf einer Sohlplatte 8 in Richtung der Drehachse 5 verschieblich geführt und kann unter Mitnahme des Messerträgers 2 mittels eines Hydraulikzylinders 9 zwischen einer vorgeschobenen Schnittstellung und einer zurückgezogenen Ruhestellung axial verschoben werden. In Fig. 1 und 3 ist die Schnittstellung voll ausgezogen dargestellt, und in Fig. 1 ist die Ruhestellung strichpunktiert angedeutet.

Wie aus der axialen Seitenansicht auf den Messerträger 1 nach Fig. 2 hervorgeht, hat die Schere im Umlaufrichtung der Messerträger versetzt angeordnete Messerpaare, deren Abstand voneinander der Länge eines zu schneidenden Probestückes entspricht. In Fig. 2 erkennt man lediglich die in den Messerträger 1 mit radial verlaufenden Schneiden eingesetzten Messer 10,11, deren Brustflächen einander zugekehrt sind, wie auch aus Fig 1 hervorgeht. Dementsprechend sind die Gegenmesser 10a und 11a mit nach außen weisenden Brustflächen an dem Messerträger 2 befestigt, und zwar an einem mittleren Vorsprung 2a.

Die Brustflächen aller Messer verlaufen parallel zu der Drehachse 5 des Messerträgers 2, so daß beim Vorschieben des Messerträgers 2 in die Schneidposition normale Schneidbedingungen zum zweifachen Schneiden eines Walzstabes nahezu quer zu seiner Längsachse vorliegen, der in Richtung der feststehenden Walzachse 12 tangential zur Umlaufbahn der Messerpaare einläuft. Die Drehachsen 4 und 5 liegen im übrigen in einer gemeinsamen Horizontalebene, die unterhalb der Walzachse 12 liegt.

Wie aus Fig. 1 hervorgeht, hat das Messerpaar 10, 10a bereits in der in Fig. 2 dargestellten Augenblickslage der Messerpaare einen Schnitt durchgeführt, wogegen die Messer 11 und 11a des nachfolgenden Messerpaares sich noch nicht überdecken. Wenn bei der weiteren Drehung der Messerträger im Gegenuhrzeigersinn nach Fig. 2 zufolge der in horizontaler Ebene geneigt verlaufenden Drehachsen 4 und 5 die Messer 11 und 11a ebenfalls zum Schnitt gelangen, führen die Messer 10 und 10a einen Überhub aus. Hierbei taucht der zentrale Vorsprung 2a des Messerträgers 2 in die zentrale Ausnehmung 1a des Messerträgers 1 ein.

Im Walzbetrieb laufen die Messerträger 1 und 2 in der Ruheposition des Messerträgers 2 ständig um, so daß ein über den Einlaufkanal 14 einlaufender Walzstab geradeaus über den auslaufseitigen Kanal 15 läuft (Fig. 2). Diesem vorgeordnet ist eine auf- und abschwenkbare Zunge 16, die normalerweise in abgesenkter Position ist und lediglich hochgeschwenkt wird, wenn bei einer Störung ein Walzstab zu der Häckselschere 17 abgelenkt werden muß. Die Zunge 16 sitzt auf einer reversierend drehbaren Schwenkwelle 18 (Fig. 1). Zum Schopfen des Vorderendes, des Hinterendes oder zum Heraustrennen eines Probestückes wird einfach der Stellzylinder 9 im Sinne eines Vorschiebens des Messerträgers 2 in Schneidposition beaufschlagt und innerhalb einer Umdrehung der Messerträger wieder zurückgestellt, so daß wegen der geneigten Schneidposition der umlaufenden Messer ein Vorderschopf mit anschließendem "Probestück", oder ein Probestück allein, oder ein Hinterschopf mit nachfolgendem "Probestück" seitlich in den Probekanal 20 ausgeworfen wird. Um diese Bewegung zu unterstützen, hat der axial verschiebbare Messerträger 2 auf einem Bogenwinkel, der seinem zuerst zum Schnitt kommenden Messer 10a zugeordnet ist, eine axial gerichtete Auswölbung 2b, die die Walzachse 12 bei der Umdrehung schneidet, wenn der Messerträger 2 in vorgeschobener Schnittposition ist. Die Auswölbung 2b ist in Fig. 3 für eine Drehlage verdeutlicht, in der bereits ein Schopfschnitt oder ein Probenschnitt ausgeführt worden ist.

Es wurde bereits ausgeführt, daß der Messerträger 2 mit dem positiv angetriebenen Messerträger 1 mechanisch synchronisiert ist. Wie nicht dargestellt ist, besteht diese Synchronisation aus einer Kardanwelle, die mit Rücksicht auf die axiale Verschiebbarkeit des Messerträgers 2 einen axialen Freiheitsgrad hat. Um den beim Schneiden auftretenden, in Umfangsrichtung der Messerträger wirkenden Kaudruck spielfrei abzustützen ist es zweckmäßig, an einem der Messerträger einen Vorsprung vorzusehen, der bei axialer Annäherung der Messerträger in eine Ausnehmung des anderen Messerträgers vorübergehend eintaucht. Das nicht vermeidbare Spiel in der kardanischen Kupplung wird hierdurch unschädlich gemacht.

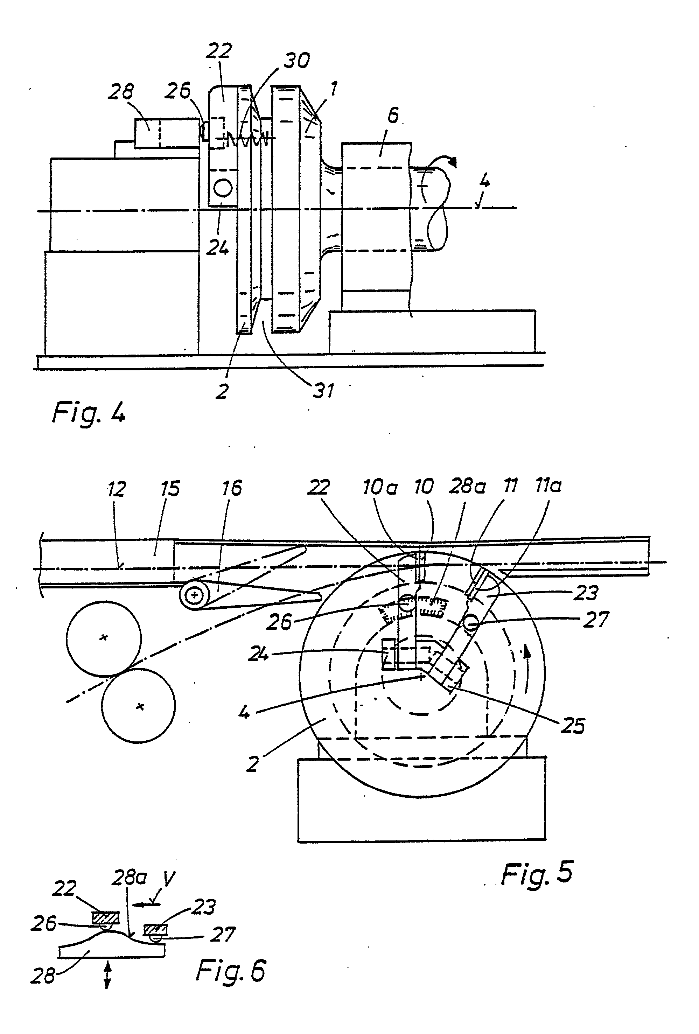

Bei dem Ausführungsbeispiel nach Fig. 4 bis 6 entspricht der axial feststehende Messerträger 1 mit seinem einen Axialschub aufnehmenden Lager 6 und den beiden aufeinanderfolgenden feststehenden Messern 10 und 11, deren Brustflächen nun einander abgekehrt sind, dem Ausführungsbeispiel nach Fig 1 bis 3. Der Messerträger 2 jedoch ist an dem Messerträger 1 angeformt und läuft insoweit synchron mit. Die zum Schnitt quer zu verschiebenden Messer 10a und 11a werden mit einander zugewandten Brustflächen von radialen Messerhebeln 22,23 getragen, die in der Nahe der Drehachse 4 in Böcken 24, 25 in Querverschieberichtung schwenkbar gelagert sind. Die Messerhebel 22, 23 tragen nach außen vorstehende Noppen 26, 27, deren kreisförmiger Bewegungsbahn ein ortsfest geführter, verschiebbarer Steuernocken 28 zugeordnet ist. Dieser Steuernocken· hat eine gebogene Auflauffläche 28a (Fig. 6,), die in Fig. 5 als vor der Zeichenebene liegend strichpunktiert dargestellt ist. Zur Ausführung eines Schopf- oder Probenschnittes wird der Steuernocken 28 gegen die Umlaufbahn der vorstehenden Noppen 26, 27 der Messerhebel 22,23 vorgesteuert, so daß die Noppen der aufeinanderfolgenden Messerhebel in der Bewegungsrichtung V nach Fig. 6 an der Auflauffläche 28a auflaufen und die Messerhebel in der Art einer Maulschere zum Schnitt verschwenken. Die Schnittbewegung der Messerhebel erfolgt gegen die Kraft von Druckfedern 30 (Fig. 4), so daß die Messerhebel nach erfolgtem Schnitt wieder in ihre radiale Schwenklage nach Fig. 4 gelangen, unterstützt durch die Fliehkraft Der Steuernocken 28 kann auch so kurzzeitig zu betätigen sein, daß der nachfolgende Messerhebel 23 außer Schnittstellung verbleibt, um beim Schopfen eines Vorderendes oder eines Hinterendes des Stabes nicht unnötigerweise noch ein "Probestück" zu schneiden.

Beim Walzbetrieb stehen die axial verschiebbaren Messer 10a und 11a gegenüber den Gegenmessern 10 und 11 soweit außerhalb einer V-förmigen Führungsrinne 31 zwischen den beiden Messerträgern 1 und 2, daß das Walzgut ungehindert zwischen den Messern hindurch zur Häckselschere 17 laufen kann, wenn die Zunge 16 hochgeschwenkt ist. In abgeschwenkter Lage der Zunge 16 läuft das Walzgut geradeaus in den Kanal 15. Beim Schneiden eines Probestückes wird durch die Querbewegung der Messer 10a und 11a durch Einschwenken deren Messerhebel 22, 23 das geschnittene Probestück seitlich in einen Probekanal 20 ausgeworfen, wie er in Fig. 1 dargestellt ist. Der Messerhebel 22 indessen führt den Anfang des geschnittenen Stabes weiter geradeaus in Kanal 15 bzw die Walzachse 12.

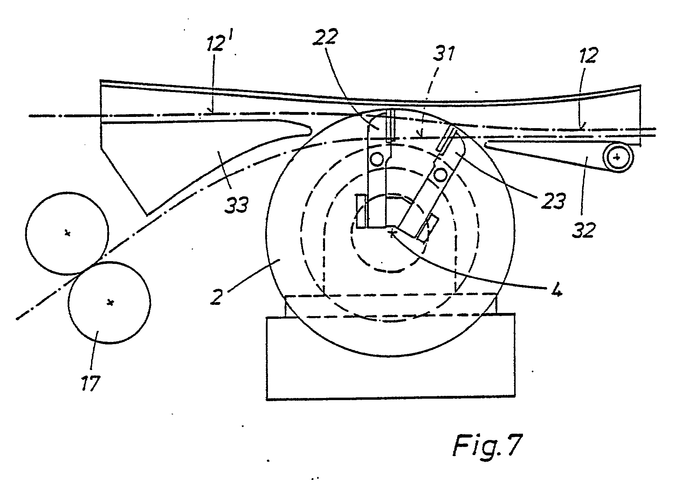

Das Ausführungsbeispiel nach Fig. 7 weicht insoweit von dem Ausführungsbeispiel nach Fig. 4 bis 6 ab, als vor der Schere eine hochsteuerbare Weiche 32 angeordnet ist. Bei abwärts geschwenkter Weiche 32 ist die Walzachse 12 so tief gelegt, daß ein Walzstab im Grunde der V förmigen Rinne 31 (Fig. 4) zwischen den Messerträgern 1 und 2 auffliegend unmittelbar zur Häckselschere 17 laufen kann, wozu eine auslaufseitige feststehende Zunge 33 vorgesehen ist. Beim Walzbetrieb ist die einlaufseitige Weiche 32 hochgesteuert und leitet den Stab in die höher gelegene Walzachse 12' und zugleich in den Schneidbereich der Messerpaare Schnitte werden ausge führt durch Betätigen des Steuernockens 28, wie in Verbindung mit dem Ausführungsbeispiel nach Fig. 4 bis 6 bereits erläutert.

## Patentansprüche

1. Rotierende Schopf- und Probenschere für DrahtWalzenstraßen mit zwei synchron rotierenden Messerträgern (1, 2) und zwei in Umlaufrichtung der Messerträger versetzt angeordneten Messerpaaren (10,10a; 11,11a) die zum Heraustrennen eines Probestückes nacheinander zum Schnitt bringbar sind, dadurch gekennzeichnet, daß
a) die Messerträger (1,2) in gegenüberliegender Anordnung um Drehachsen (4,5) rotieren, die in einer gemeinsamen, unterhalb der Walzachse (12) verlaufenden Horizontalebene liegen,
b) die Messer (10,10a bzw. 11, 11a) in paarweiser Zuordnung mit radial verlaufenden Schneiden eingesetzt sind, und
c) die Messerpaare durch relative Querverschiebung der Schneiden zueinander zum Schnitt bringbar sind.

2. Schere nach Anspruch 1, dadurch gekennzeichnet, daß zur relativen Querverschiebung der Messerschneiden die Drehachsen (4,5) der Messerträger (1,2) in der gemeinsamen Horizontalebene um einen spitzen Winkel ( α ) von wenigen Graden zueinander geneigt sind, und daß ein Messerträger (2) axial soweit verschieblich ist, daß das den ersten Schnitt ausführende Messerpaar (10,10a) eine so große Schnittüberdeckung hat, daß das zweite nachfolgende Messerpaar (11,11a) noch zum Schnitt gelangt (Fig. 1 bis 3).

3. Schere nach Anspruch 2, dadurch gekennzeichnet, daß der axial verschiebbare Messerträger (2) auf einem Bogenwinkel, der dem zuerst zum Schnitt kommenden Messerpaar (10, 10a) zugeordnet ist, mit einer axial gerichteten Auswölbung (2b) versehen ist, die ein Schopfende oder/und ein herausgeschnittenes Probestück in einer horizontalen Ebene in einen Probekanal (20) ablenkt.

4. Schere nach Anspruch 1, dadurch gekennzeichnet, daß zur relativen Querverschiebung der Messerschneiden die Messer (10a, 11a) eines der beiden Messerträgers (2), in den die Messer mit einander zugewandten Brustflächen eingesetzt sind, an getrennten, am Messerträger in der Nahe dessen Drehachse (4) in Querverschieberichtung schwenkbar gelagerten Messerhebeln (22,23) angeordnet sind, die von einem ortsfest geführten, verschiebbaren Steuernocken (28) entgegen Federkraft (30) in Schnittstellung schwenkbar sind, wobei der Steuernocken als gebogene Auflauffläche (28a) für die Messerhebel ausgebildet ist (Fig.4-6).

5. Schere nach Anspruch 4, dadurch gekennzeichnet, daß der Steuernocken (28) so kurzzeitig zu betätigen ist, daß der nachfolgende Messerhebel (23) ausser Schnittstellung verbleibt.

6. Schere nach Anspruch 4, dadurch gekennzeichnet, daß der Schere eine Weiche (32) vorgeordnet ist, die in abwärts geschwenkter Lage das Vorderende eines Walzstabes in eine von den Messerträgern gebildete V-förmige Führungsrinne (31) und über eine auslaufseitige feststehende Zunge (33) einer Häckselschere (17) zuleitet, und die, zum Probenschnitt aufwärts geschwenkt, den Walzstab in den Bereich der Messerschneiden und nach der seitlichen Ablenkung des geschnittenen Probestückes den Walzstab in eine höher gelegene Walzachse (12') leitet (Fig.7).

## Claims

1. Rotating cropping and sampling shears for wire rolling trains with two synchronously rotating blade carriers (1, 2) and with two blade pairs (10, 10a, 11, 11a), which are arranged staggered in direction of rotation of the blade carriers and bringable one after the other to cutting for the severing-out of a sample piece, characterised thereby, that
   a) the blade carriers (1, 2) rotate in oppositely disposed arrangement about rotational axes (4, 5), which lie in a common horizontal plane extending below the rolling axis (12),
   b) the blades (10, 10a or 11, 11a) are inserted in pairwise association with radially extending cutting edges and
   c) the blade pairs are bringable to cutting through transverse displacement of the cutting edges one relative to the other.

2. Shears according to claim 1, characterised thereby, that for the relative transverse displacement of the cutting edges, the rotational axes (4, 5) of the blade carriers (1, 2) are inclined each to the other through an acute angle (α) of a few degrees in the common horizontal plane and that one blade carrier (2) is axially displaceable so far that the blade pair (10, 10a) executing the first cut has such a large cutting overlap that the second and following blade pair (11, 11a) still comes to cutting (Figs. 1 to 3).

3. Shears according to claim 2, characterised thereby, that the axially displaceable blade carrier (2) is provided over an angle or arc, which is associated with the blade pair (10, 10a), with an axially directed convexity (2b), which deflects a cropped end and/or an excised sample piece in an horizontal plane into a sampling channel (20).

4. Shears according to claim 1, characterised thereby, that for the relative transverse displacement of the cutting edges, the blades (10a, 11a) of one of both the blade carriers (2), into which the blades are inserted with mutually facing front surfaces, are arranged at separate blade levers (22, 23), which are borne to be pivotable in transverse displacement direction at the blade carrier in the proximity of its rotational axis (4) and are pivotable into cutting position against spring force (30) by a stationarily guided displaceable control cam (28), wherein the control cam is constructed as curved ramp surface (28a) for the blade levers (Figs. 4 to 6).

5. Shears according to claim 4, characterised thereby, that the control cam (28) is to be actuated for such a short time that the following blade lever (23) remains outside the cutting position.

6. Shears according to claim 4, characterised thereby, that a shunt switch (32), which in downwardly pivoted position leads the front end of a rolled bar into a V-shaped guide groove (31) formed by the blade carriers and by way of a stationary tongue (33) at the outlet side to a chopping shears (17) and which pivoted upwardly for the sample cutting conducts the rolled bar into the range of the blade cutting edges and after the lateral deflection of the cut sample piece conducts the rolled bar into a higher rolling axis (12') (Fig. 7).

## Revendications

1. Cisaille à ébouter rotative pour échantillonnage destinée à des trains à fils et comportant deux porte-lames (1, 2) qui tournent en synchronisme et deux paires de lames (10, 10a, 11, 11a) qui sont décalées dans le sens de la rotation des porte-lames et qui, pour le prélèvement d'un échantillon, peuvent être amenées l'une après l'autre à effectuer la coupe, caractérisée en ce que:
   a) les porte-lames (1, 2), disposés l'un en face de l'autre, tournent autour d'axes de rotation (4, 5) qui sont dans un plan horizontal commun situé audessous de l'axe de laminage (12),
   b) les lames (10, 10a ou 11, 11a) sont montées par paires, leurs tranchants étant orientés dans le sens radial,
   c) les paires de lames peuvent être amenées à effectuer la coupe par déplacement transversal relatif des tranchants l'un par rapport à l'autre.

2. Cisaille selon la revendication 1, caractérisée en ce que, pour le déplacement transversal relatif des tranchants des lames, les axes de rotation (4, 5) des portelames (1, 2) situés dans le plan horizontal commun font l'un avec l'autre un angle aigu (α) de l'ordre de quelques degrés et en ce qu'un portelames (2) peut être déplacé assez loin dans le sens axial pour que la paire de lames (10, 10a) qui effectue la première coupe ait une superposition de coupe suffisante pour que la deuxième paire de lames suivante (11, 11a) arrive encore à effectuer la coupe (Figures 1 à 3).

3. Cisaille selon la revendication 2, caractérisée en ce que le porte-lames (2) qui peut se déplacer dans le sens axial comporte, sur un secteur d'arc correspondant à la paire de lames (10, 10a) qui est amenée la première à effectuer la coupe, une partie saillante courbe (2b) qui est orientée dans le sens axial et qui fait dévier dans un plan horizontal, dans conduit (20) pour échantillons, une extrémité éboutée et/ou un échantillon détaché par le coupe.

4. Ciselle selon la revendication 1, caractérisée en ce que, pour le déplacement transversal relatif des tranchants de lames, les lames (10a, 11a) de l'un des deux porte-lames (2), dans lesquels les lames sont montées de telle manière que leurs surfaces frontales soient tournées l'une vers l'autre, sont montées sur des leviers de lames séparés (22, 23) qui sont montés, de manière à pouvoir pivoter dans la direction du déplacement transversal, sur le porte-lames à proximité de son axe de rotation (4) et qui peuvent pivoter, en étant commandés par une came (28) qui est guidée à poste fixe et qui peut se déplacer, en surmontant la force d'un ressort (30), pour se placer en position de coupe, la came de commande étant constituée par une surface d'accostage courbe (28a) destinée aux leviers de lames (Figures 4 à 6).

5. Cisaille selon la revendication 4, caractérisée en ce que la lame de commande (28) doit être mise en action pendant une durée suffisamment courte pour que le levier de lame suivant (23) reste hors de sa position de coupe.

6. Cisaille selon la revendication 4, caractérisée en ce que le dispositif comporte, en avant de la cisaille, un dispositif d'aiguillage (32) qui, dans sa position de pivotement vers le bas, envoie l'extrémité avant d'une barre laminée dans une goulotte de guidage (31) en forme de V formée par les porte-lames et, au moyen d'une languette fixe (33) située du côté de la sortie, à une cisaille à hachoir (17) et qui, dans sa position de pivotement vers le haut, pour la coupe des échantillons, envoie la barre laminée dans la zone des tranchants de lames et, après que l'échantillon coupé a été dévié sur le côté, dirige la barre laminée suivant un axe de laminage (12') situé plus haut (Figure 7).

Fig.1

Fig. 2

Fig. 3

Fig. 4

Fig. 5

Fig. 6

Fig.7